# EUROPEAN PATENT APPLICATION

(11) **EP 4 703 931 A1**
(43) Date of publication of application: **04.03.2026**
(21) Application number: 24197371.8
(22) Date of filing: 29.08.2024
(51) Int. Cl.: G06F 21/57, G06F 21/74

(54) **SEMICONDUCTOR CHIP WITH A FIRMWARE, FIRMWARE AND INDUSTRIAL DEVICE**

(71) Applicant: Siemens Mobility GmbH, 80997 München (DE)
(72) Inventor: The designation of the inventor has not yet been filed
(74) Representative: Siemens Patent Attorneys

(57) **Abstract**

The Semiconductor chip comprises at least a processor (MCUO, RISC) and a trusted execution environment (SW; SHP, IHP, STP, ITP) and a firmware configured to run on the semiconductor chip and the firmware is configured to run a resilience engine (RE) that is realized within the trusted execution environment (SW; SHP, IHP, STP, ITP).

## Description

### FIELD OF INVENTION

The invention relates to a semiconductor chip with a firmware, a firmware and an industrial device. The invention more particularly relates to a firmware resilience engine implemented using trusted execution environments

### BACKGROUND

Cyber-physical systems are increasingly prevalent in various industries, from industrial control systems to consumer electronics. As these systems become more interconnected and complex, ensuring their resilience against cyber attacks has become a critical concern. Cyber resilience refers to the ability of a system to maintain its core functionality and reduce the impact of malicious cyber attacks.

Traditionally, cyber resilience has been approached through a combination of hardware and software solutions. Hardware-based security measures often involve dedicated security chips or modules, while software-based approaches may include antivirus programs, firewalls, and intrusion detection systems. However, these solutions can be costly to implement, especially in resource-constrained devices, and may not provide comprehensive protection against sophisticated attacks.

In recent years, there has been growing interest in leveraging existing processor features to enhance system security and resilience. Modern processors often include capabilities such as privilege levels and memory protection mechanisms, which can be utilized to create isolated execution environments. These isolated environments can potentially be used to implement security functions without the need for additional hardware.

Trusted Execution Environments (TEEs) have emerged as a promising technology for enhancing system security. TEEs provide a secure area within a processor where sensitive code and data can be protected from unauthorized access or modification. However, the effective utilization of TEEs for implementing comprehensive cyber resilience solutions remains an area of active research and development.

As cyber threats continue to evolve, there is an ongoing need for innovative approaches to cyber resilience that can be widely deployed across various types of devices and systems. Ideally, such solutions should be able to leverage existing hardware capabilities to minimize additional costs and complexity, while still providing robust protection against a wide range of potential attacks.

Thus, it is the aim of the present invention to provide an improved semiconductor chip which has similar advantages compared to resilience engines utilized in prior art. Furthermore, it is the aim of the present invention to provide an improved firmware that could form an improved semiconductor chip according to the invention. Additionally, it is the aim of the present invention to provide an industrial device with improved security and safety.

These aims of the present invention are fulfilled with a semiconductor chip comprising the features claimed in claim 1 of the present invention, with a firmware with the features claimed in claim 13 of the present invention and with an industrial device with the features claimed in claim 15 of the present invention.

According to an aspect of the present invention, a semiconductor chip is provided. The semiconductor chip includes at least a processor and a trusted execution environment and a firmware configured to run on the semiconductor chip, wherein the firmware is configured to run a resilience engine that is realized within the trusted execution environment. This aspect provides the advantage of implementing a secure resilience engine without requiring additional hardware components, leveraging existing trusted execution environment capabilities.

Advantageously, the invention allows the implementation of a secure resilience engine without additional hardware components. Advantageously, the invention allows the utilization of existing trusted execution environment capabilities, that are offered by modern and commercially available processors. This allows for enhanced system security, for more flexibility in deployment across various processor architectures, and a larger ease of updates and maintenance, and applicability to a wide range of devices including resource-constrained systems. These advantages contribute to improved cyber resilience, reduced vulnerability to attacks, and increased overall system reliability and security.

According to optional and advantageous aspects of the present invention, the semiconductor chip may include one or more of the following features:
The processor may comprise the trusted execution environment, providing the advantage of utilizing existing processor capabilities for enhanced security. The processor may be configured to operate with privileged processes and unprivileged processes, in which the trusted execution environment is realized with privileged processes of the processor, offering the benefit of stronger isolation between secure and non-secure operations. The processor may be configured with memory protection technology resulting in at least one secure environment of the processor and at least one insecure environment of the processor, wherein the trusted execution environment is realized with the secure environment, enhancing overall system security.

The resilience engine may comprise integrity and/or authenticity information of a resilience target, enabling robust verification of system components. The resilience target may be an application software, allowing for protection of critical software assets. The resilience engine may comprise a timer functionality that is configured to trigger an integrity check and/or authenticity check of the resilience target by the resilience engine, providing periodic automated security checks. The resilience engine may comprise an attestation functionality configured to perform a remote attestation of a resilience target, enabling secure verification of system state by remote parties.

The resilience engine may be configured for the recovery of at least one app and may comprise at least one hash for the app and cryptographic means for cryptographically verifying the app, wherein the recovery of the app preferably involves chunks, and wherein the resilience engine preferably comprises hashes for the chunks. This feature allows for efficient and secure app recovery processes. The resilience engine may be configured to recover an application from an app backup and may be configured to trigger an integrity check and/or authenticity check of the app backup, providing a robust recovery mechanism. The resilience engine may be configured to initiate a remote app backup in case the integrity check and/or authenticity check of the app backup fails, ensuring system resilience even in case of local backup corruption.

The processor may be an ARM processor, in particular an ARMv7-M processor or an ARMv7-M compatible processor, or a RISC-V-processor, allowing for implementation on widely used processor architectures.

According to another advantageous aspect of the present invention, a firmware for a semiconductor chip is provided. The semiconductor chip comprises at least a processor and a trusted execution environment. The firmware is configured to run on the semiconductor chip and is configured to run a resilience engine in the trusted execution environment. This aspect offers the advantage of implementing secure resilience features through software, enabling easy deployment and updates.

According to other advantageous aspects of the present invention, the firmware may be configured to run on a semiconductor chip with a processor that comprises the trusted execution environment, allowing for optimal utilization of processor security features.

According to yet another advantageous aspect of the present invention, an industrial device with a semiconductor chip according to one of the previous aspects and/or running a firmware according to the previous firmware aspects is provided. This aspect enables the application of secure resilience features in industrial settings, enhancing the security and reliability of industrial systems.

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

In the following, the invention is described in more detail with the help of the accompanying drawing.
- FIG. 1: illustrates a schematic diagram of an exemplary system for an architecture of a semiconductor chip according to the invention with a firmware according to the invention realizing a resilience engine in a first embodiment,
- FIG. 2: shows a diagram of processes according to the embodiment according to fig. 1 as a schematic drawing,
- FIG. 3: shows a diagram of processes according to the embodiment according to fig. 2 as a schematic drawing,
- FIG. 4: illustrates an example use case of the embodiment according to fig. 3 in a schematic drawing,
- FIG. 5: shows an exemplary architecture of the embodiment according to fig. 1 as a schematic drawing,
- FIG. 6: illustrates a schematic diagram for processes of a semiconductor chip according to the invention with a firmware according to the invention realizing a resilience engine in a second embodiment,
- FIG. 7: shows a more detailed diagram of processes according to the embodiment according to fig. 6 as a schematic drawing,
- FIG. 8: shows an exemplary architecture of a semiconductor chip according to the embodiment according to fig. 6 as a schematic drawing,
- FIG. 9: shows the architecture according to fig. 8 in a more detailed manner as a schematic drawing, and
- FIG. 10: illustrates an example use case of the embodiment according to fig. 9 in a schematic drawing.

The depicted embodiments show semiconductor chips in the form of Microcontrollers MCUO, in which a Resilience Engine RE is purely realized in firmware. This is achived by utilizing two basic primitives, which many microcontrollers provide anyway, independently from the present invention. These basic primitives are privilege levels, comprising at least of two privilege levels, namely a privileged and an unprivileged level on one hand and memory protection technology, such as memory protection unit MP in ARM or physical memory protection PMP in RISC-V architectures.

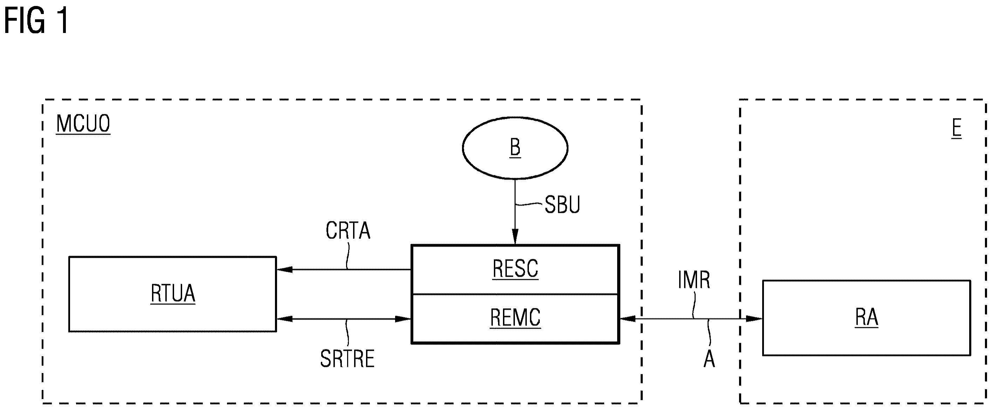

The overall realization of the invention is shown in Fig. 1 which details how the Resilience Engine RE is realized in firmware. The system consists of three main components: a user application, which is the Resilience Target RTUA to be protected, the Resilience Engine RE that contains a Resilience Engine Startup Code RESC and a Resilience Engine Main Code REMC, and a Resilience Authority RA, which queries the Resilience Engine RE. The Resilience Engine RE and the Resilience Target RTUA are components of the Microcontroller MCUO, whereas the Resilience Authority RA is a trusted third party. A Resilience Authority RA can be either another component on the same Microcontroller MCUO or a remote device. The connection between the Resilience Authority RA and the Resilience RE is trusted, e.g., using the TLS protocol or similar mechanisms, e.g. authenticated, integrity protected and/or encrypted protocols, which may involve algorithms such as pre-quantum algorithms, post-quantum algorithms or hybrid algorithms.

The working process of system is as follows:
1. At first, the system is started with a Boot B and at System Boot-up SBU, the Resilience Engine Startup Code RESC is executed once in privileged level to initialize the system, configure Timer T and Peripheral Interrupts PI, and memory protection policies. These policies include making Timer T, Peripheral P and secret data, that will be later used for integrity and authenticity check, only accessible by privileged level. This is a crucial step to isolate important resources of the Resilience Engine RE from the Resilience Target RTUA, which is under the risk of compromise by attackers.
2. Then, The Resilience Engine Startup Code RESC switches SRTRE the system from privileged level to unprivileged level and calls CRTA the Resilience Target RTUA, which is then executed in unprivileged level and cannot access to the resources of the Resilience Engine RE protected by Memory Protection MP.
3. At some point, the configured Timer T expires and triggers an interrupt service routine.
4. The interrupt service routine, which is part of the Resilience Engine Main Code REMC, checks the integrity and authenticity of the Resilience Target RTUA. This can be done, e.g., either by computing an HMAC value or signature and comparing it with a previously stored value using Secret Keys SK. It is important that this pre-calculated value is stored in a memory region, which is protected by Memory Protection MP technology so that it can only be read and written by the Resilience Engine RE as well as the Secret Keys SK needed for the secret computations. This check is done periodically, every time the Timer T expires.
5. If the Resilience Engine RE detects no mismatch, it moves on executing the Resilience Target RTUA. Once a mismatch is detected, The Resilience Engine Main Code REMC disables all interfaces of the Resilience Target RTUA to isolate it from the rest of the system and starts a recovery process to bring the Resilience Target RTUA to its latest working state.
6. Once the recovery is successfully finished, the Resilience Target RTUA can be executed again.
7. At some point of time, a remote attestation request comes from Resilience Authority RA over a secure channel, which then triggers a Peripheral Interrupt PI and its corresponding interrupt service routine, which is also part of the Resilience Engine Main Code REMC. This interrupt service routine controls the remote attestation process and proves the integrity of the Resilience Target RTUA to the Resilience Authority RA. The remote attestation process works as follows:
   a. The Resilience Engine RE itself attests its self-integrity by computing an HMAC or a signature of its own program code and sending the result as an Integrity Mismatch Report IMR to the Resilience Authority RA. The RA verifies the HMAC or signature.
   b. The Resilience Engine RE attests the integrity of the Resilience Target RTUA by computing an HMAC or a signature of the program code of the Resilience Target RTUA and sending the result to the Resilience Authority RA. The Resilience Authority RA verifies the HMAC or signature.

In further embodiments, which in all other aspects correspond to the depicted embodiment, add further features to enhance the overall system security:
- In a further embodiment, the Resilience Engine RE consists of two layers: the first additional layer, which is stored e.g., in a ROM memory, and performs an integrity check of the second layer, before executing it. The second layer is stored e.g. in a Flash memory and contains the main Resilience Engine RE functionality such as the Resilience Engine Startup Code RESC and the Resilience Engine Main Code REMC. In this embodiment, the Resilience Engine RE can be even more securely booted. The integrity check can be done using HMAC or asymmetric signatures.
- In a further embodiment, the Resilience Engine Startup Code RESC and the Resilience Engine Main Code REMC are obfuscated together to prevent the attacker from being able to understand or modify the Resilience Engine RE functionality including secret keys SK. In this way, it would be more difficult for the attacker to understand the functionality of the Resilience Engine RE.
- In a further embodiment, the secret keys are stored in a separate secure element. In this way, it would be more difficult for the attacker to extract the secret key material.
- In a further embodiment, if the integrity check fails in step 4, then the Resilience Engine RE additionally sends a failure report to the Resilience Authority RA over a secure channel. In this way, the Resilience Authority RA can be informed of a failure of the Resilience Engine RE.
- In a variant of this invention, also the secret keys SK can be attested by the Resilience Authority RA.

Signature algorithms used in all the depicted embodiments may be pre-quantum algorithms, e.g. DSA, ECDSA, EdDSA, etc or a post-quantum algorithms, e.g., SPHINCS+, Dilithium, Falcon, or other algorithms.

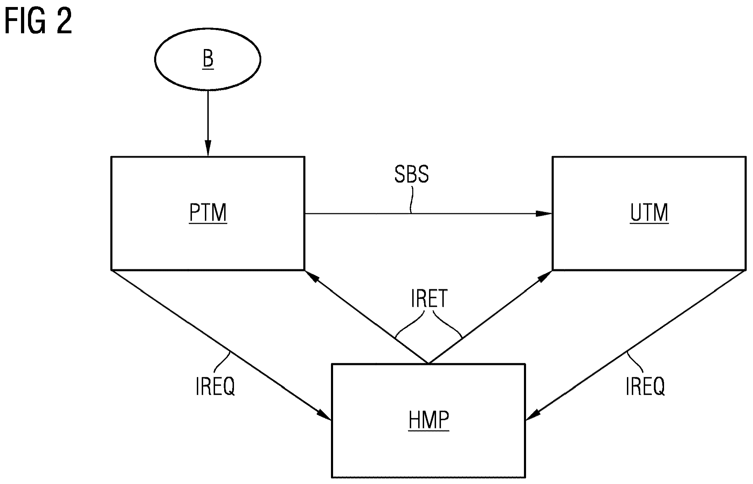

The idea also is now explained more concretely, taking an ARMv7-M processor as an example. ARMv7-M processors come with two operations modes, namely thread mode and handler mode, and two privilege levels, namely a privileged level and an unprivileged level, as depicted in Figure 2. Privileged level has full access to all system resources, including the configuration registers of the processor, whereas unprivileged level has restricted access to system resources. Additionally, thread mode can run in both privileged level as a Privileged Thread Mode PTM and in unprivileged level as Unprivileged Thread Mode UTM, whereas a handler mode HMP can only run as privileged level.

During boot B, the core goes into the Privileged Thread Mode PTM. In the Privileged Thread Mode PTM, the processor can switch SBS to the Unprivileged Thread Mode UTM by simply setting the ARM privilege level control registers in software. However, switching back to the Privileged Thread Mode PTM from the Unprivileged Thread Mode UTM is not straightforward. To achieve this, an interrupt needs to be generated which then triggers its corresponding interrupt service routine that consists of interrupt requests IREQ and interrupt returns IRET. In ARM architecture, interrupt service routines are handled in a special privileged mode by design, called Handler Mode HMP. In interrupt service routines, these privilege level control registers can be reset to privileged level, which switches the processor back to privileged level once the interrupt is handled and returned to the normal execution.

In the depicted embodiment, these above-mentioned features of ARM are used to implement a Resilience Engine RE in a secure way.

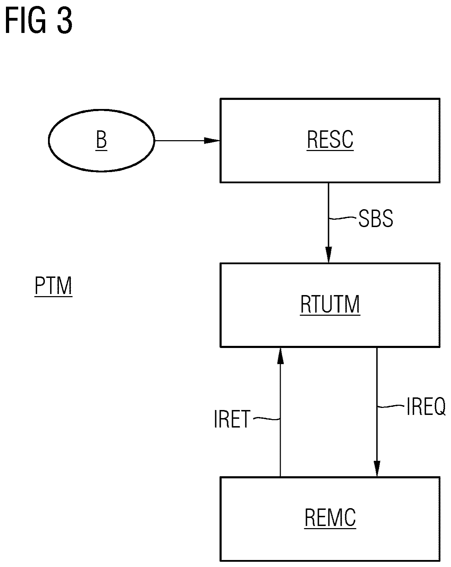

The utilization of the ARM features is depicted in Figure 3 in a more detailed way. Fig. 3 shows the following steps:
1. The system boots up with a Boot B in privileged thread mode PTM.
2. The Resilience Engine Startup Code RESC makes system initializations, such as a MPU configuration, that among other processes involves protecting the Timer T, the Secret Keys SK, and starts the Timer T of the interrupt, configures Peripheral Interrupt PI, switches to Unprivileged Thread Mode UTM, and then jumps to the Resilience Target RTUA.
3. The Resilience Target Application in Unprivileged Thread Mode RTUTM executes in Unprivileged Thread Mode UTM and has no right to set processor rights and access the important resources of the Resilience Engine RE, such as the Timer T interrupt, peripheral interrupts PI, Secret Keys SK for integrity and authenticity checks and more.
4. At some point, the Timer T expires and triggers its corresponding interrupt service routines consisting of Interrupt Requests IREQ and interrupt Returns IRET which is executed in Handler Mode HMP. These interrupt service routines contain part of the Resilience Engine Main Code REMC for integrity and authenticity check functionality.
5. RE checks the integrity/authenticity of the Resilience Target Application in Unprivileged Thread Mode RTUTM. If there is a match, it returns to the Resilience Target Application in Unprivileged Thread Mode RTUTM. If there is a mismatch, it raises an alert, reports, to the Resilience Authority RA, cancels the Peripherals P connection of the Resilience Target Application in Unprivileged Thread Mode RTUTM, and starts a recovery process, either on-chip or remote.
6. At some point, the Resilience Authority RA may also send a request to start a remote attestation process. This triggers another interrupt, such as a UART peripheral interrupt PI or SPI peripheral interrupt PI.

The corresponding interrupt service routine executes again in handler mode which contains the Resilience Engine RE remote attestation functionality to prove system integrity, authenticity and version to the Resilience Authority RA.

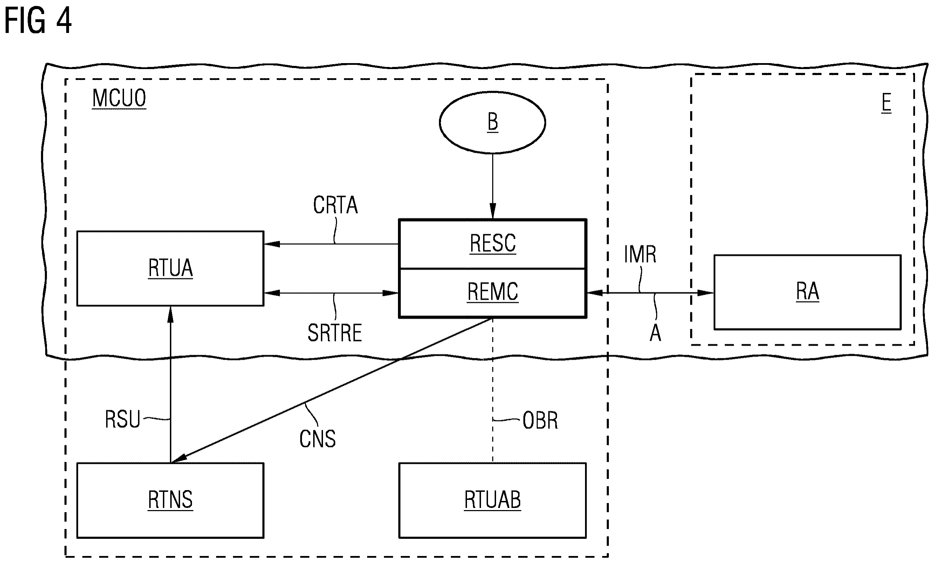

A particular use case of the Resilience Engine RE as realized described above is depicted in Figure 4 that implements a completely secure system. The core functionality, which is represented in the solid box, that embraces parts of both dashed boxes, is the same as already explained using Figure 1. According to Fig. 4, In this extended architecture design, there are two additional elements, namely a Resilience Target Unprivileged Application Backup RTUAB and a Resilience Target Network Stack RTNS, which bring some additional functionalities to system. These can be listed as follows:
1. In case of an integrity mismatch in the periodical integrity checks, the Resilience Engine RE can start an on-chip recovery process OBR to recover the Resilience Target RTUA from the Resilience Target Unprivileged Application Backup RTUAB. However, the Resilience Engine RE must ensure that the Resilience Target Unprivileged Application Backup RTUAB. is not modified or corrupted. Therefore, periodical integrity checks need to be also executed on the Resilience Target Unprivileged Application Backup RTUAB.
2. In case of an integrity mismatch on both the Resilience Target RTUA and the Resilience Target Unprivileged Application Backup RTUAB, the Resilience Engine RE controls CNS the Resilience Target Network Stack RTNS to start a Remote Software Update RSU for recovering both the Resilience Target RTUA and the corresponding Resilience Target Unprivileged Application Backup RTUAB. To increase security level, the Resilience Engine RE needs to check the integrity of the Resilience Target Network Stack RTNS as well.

Even if there is no integrity mismatch, the Resilience Authority RA may decide to update the Resilience Target RTUA based on the result of the remote attestation process, because of an application update to update an older Resilience Target RTUA.

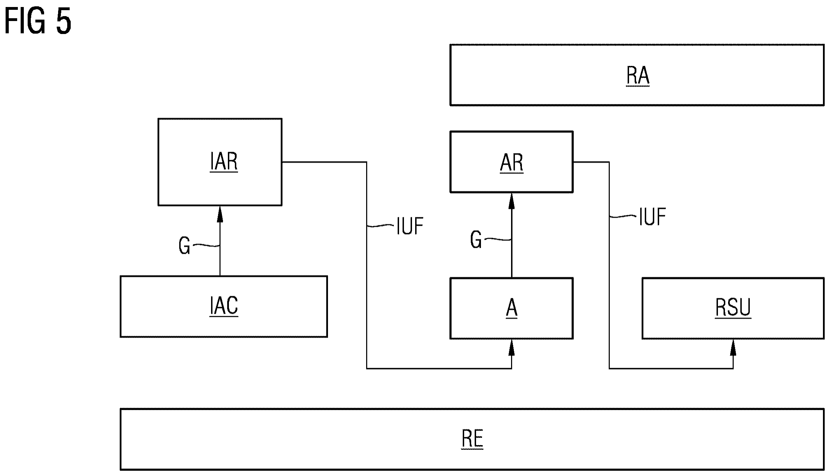

To sum up, the Resilience Engine RE comes up with three main functionalities in this extended architecture design. These functionalities are an Integrity and Authority Check IAC, a Remote Attestation A and a Remote Software Update RSU. Software Update". The relation of these functionalities is depicted in Figure 5 for an example case, where the Resilience Engine RE is responsible for all of them and the Resilience Authority RA is responsible for Remote Attestation A and Remote Software Update RSU.

This example case consists of following steps:
1. The Resilience Authority RA sends a remote attestation A request to the Resilience Engine RE.
2. Once the Resilience Engine RE receives the remote attestation A request, it checks the integrity and authenticity with an Integrity and Authenticity Check IAC and Generates G an Integrity and Authenticity Result IAR, that indicates integrity and authenticity.
3. The Resilience Engine RE uses IUF this Integrity and Authenticity Result IAR for Remote Attestation A. The Remote Attestation Generates G an Attestation Result AR.
4. This Attestation Result AR is used IUF by the Resilience Authority to decide, whether an update is needed or not and sends its decision back to the Resilience Engine RE.
5. The Resilience Engine RE starts a controlled Remote Software Update to recover or update the Resilience Target RTUA.

In another embodiment, the Resilience Engine RE is also purely realized in firmware so to isolate its resources from the rest of the system.

This embodiment uses hardware Trusted Execution Environments TEEs.

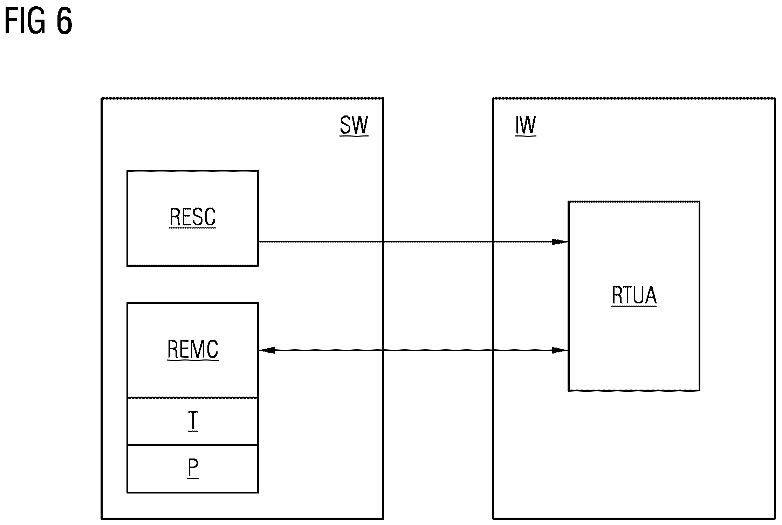

For this, microcontrollers comprise two worlds, namely a Secure World SW and an Insecure World IW as shown in Fig. 6.

The working process of this architecture consists of following steps:
1. At first, the system is started with a Boot B and at System Boot-up SBU, the Resilience Engine Startup Code RESC is executed once in the Secure World SW to configure Timer T and Peripheral Interrupts PI, which are protected by the secure world.
2. Then, the Resilience Engine Startup Code RESC switches the system from the Secure World SW to the Insecure World IW, where the Resilience Target RTUA is executed. Therefore, the Resilience Target RTUA cannot access the resources of the Resilience Engine RE, such as Timer T and Peripheral Interrupt PI since they are protected by TEE technology.
3. At some point, the configured Timer T expires and triggers an interrupt service routine, which is executed in the Secure World SW.
4. An interrupt service routine, which is part of the Resilience Engine Main Code REMC, checks the integrity and authenticity of the Resilience Target RTUS in the Insecure World IW. This can be done, e.g., either by computing an HMAC value or signature and comparing it with a previously stored value. It is important that this pre-calculated value is stored in the Secure World, which is then protected by TEE technology so that it can only be read and written by the Resilience Engine RE as well as the Secret Keys SK needed for the secret computations. This check is done periodically, every time the Timer T expires.
5. If the Resilience Engine RE detects no mismatch it finishes the interrupt service routine and moves on executing the Resilience Target RTUA. Once a mismatch is detected, the Resilience Engine Main Code REMC disables all interfaces of the Resilience Target RTUA to isolate it from the rest of the system and starts a recovery process to bring the Resilience Target RTUA to its latest working state. This recovery process can be onboard, remote or in a more efficient way, which is explained later as a particular use case.
6. Once the recovery is successfully finished, the Resilience Target RTUA can be executed again.

At some point of time, a remote attestation request comes from the Resilience Authority, which again constitutes a trusted third party, over a secure channel, which then triggers a Peripheral Interrupt PI and its corresponding interrupt service routine, which is also part of the Resilience Engine Main Code REMC in the Secure World SW. This interrupt service routine controls the Remote Attestation A process and proves the Resilience Target RTUA integrity to the Resilience Authority RA.

The idea is now explained more concretely, taking a ARM TrustZone TEE in ARMv8-M processor architecture as an example for hardware TEEs. This processor architecture is the successor of ARMv7-M architecture, which has been already described with the help of Fig. 2.

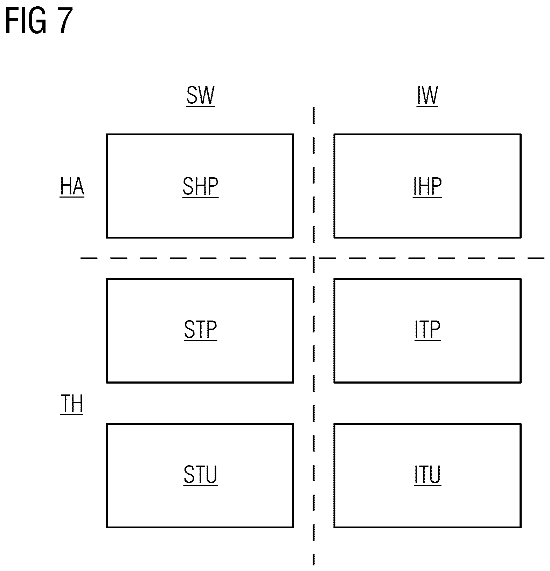

ARMv8-M architecture now enhances the ARMv7-M architecture by providing a TrustZone extension and brings two new states, namely a secure state, in the image and in the following also referred to as the Secure World SW, and an insecure state, also referred to as the Insecure World IW. This doubles the number of Handler HA states and Thread TH states in ARMv7-M from three to six, as depicted in Figure 7. These states are a Secure Handler (privileged) SHP, a Secure Thread (Privileged) STP, a Secure Thread (Unprivileged) STU, an Insecure Handler (Privileged) IHP, an Insecure Thread (Privileged) IPT, and an Insecure Thread (Unprivileged) ITU.

In ARMv8-M, when TrustZone is enabled, memory space is partitioned into secure and non-secure memory regions by hardware. The secure memory space is further divided into regions, namely secure and non-secure callable. Secure regions are used for memory, peripherals P and interrupts that are only accessible by the Secure World SW. The non-secure callable regions are a special part of the secure regions, where the functions are stored, which can be called by the Insecure World IW. Non-secure regions region are used for memory, peripherals P and interrupts that are accessible by both the Secure World SW and the Insecure World IW.

In ARMv8-M architecture, once the core boots up, it starts from the Secure World SW in the Secure Thread (Privileged) STP mode. The switching mechanism between the modes in a world works exactly same as mentioned in ARMv7-M. The switch from Secure World SW to Insecure World IW can be done using ARM TrustZone specific instructions. Once the core switches from the Secure World SW to the Insecure World IW for the first time, it starts from the Secure Thread (Privileged) STP mode. However, switching from the Insecure World IW to the Secure World SW is not that straightforward. The Insecure World IW cannot directly switch to the Secure World SW, but can call the functions, which are stored in a non-secure callable region, that are executed in the Secure World SW. This invention reports provides another mechanism to switch from the Insecure World IW to the Secure World SW to execute the Resilience Engine RE securely. This mechanism is explained in the working process in detail.

According to the document, TrustZone Technology for ARMv8-M Architecture, https://developer.arm.com/documentation/100690/0100/-9-Forms-of-transition-between-Secure- and-Non-secure-worlds, there are no restrictions regarding whether a secure interrupt can take place when the processor is running in an Insecure World IW. That means, a Timer T interrupt stored in the Secure World SW will be triggered, even if the core is executing in the Insecure World IW. This feature makes ARM TrustZone an active architecture, which is crucial for this Resilience Engine RE implementation. In the depicted embodiments, the above-mentioned features of the ARM cortex are used to implement and secure the Resilience Engine RE.

The architectural design is similar to that depicted in Figure 1, and the working process is similar to Figure 3 and consists of the following steps:
1. At system boot-up, The Resilience Engine Startup Code RESC is executed once in the Secure World SW in Privileged Thread mode to configure Timer T and Peripheral Interrupts PI. This is a crucial step to make TrustZone architecture active for the Resilience Engine RE.
2. Then, The Resilience Engine Startup Code RESC switches the system from the Secure World SW to the Insecure World IW. In the Insecure World, the system starts in privileged mode by default, where the Resilience Target RTUA is executed. Therefore, the Resilience Target RTUA cannot access the resources of the Resilience Engine RE, such as the Timer T and the Peripheral Interrupts PI, since they are protected by TrustZone.
3. At some point, the configure Timer T expires and triggers an interrupt service routine.
4. The interrupt service routine, which is part of the Resilience Engine Main Code REMC main code, checks the integrity and authenticity of the Resilience Target RTUA in the Insecure World IW. This can be done, e.g., either by computing an HMAC value or signature and comparing it with a previously stored value. It is important that this pre-calculated value is stored in the Secure World SW, which is then protected by TrustZone technology so that it can only be read and written by the Resilience Engine RE as well as the Secret Keys SK needed for the secret computations. This check is done periodically, every time the Timer T expires.
5. If the Resilience Engine RE detects no mismatch it finishes the interrupt service routine and moves on executing the Resilience Target RTUA. Once a mismatch is detected, The Resilience Engine Main Code REMC disables all interfaces of the Resilience Target RTUA to isolate it from the rest of the system and starts a recovery process to bring the Resilience Target RTUA to its latest working state.
6. Once the recovery is successfully finished, the Resilience Target RTUA can be executed again.
7. At some point of time, a remote attestation A request comes from the Resilience Authority RA over a secure channel, which then triggers a Peripheral Interrupt PI and its corresponding interrupt service routine, which is also part of the Resilience Engine Main Code REMC in the Secure World SW. This interrupt service routine controls the remote attestation A process and proves the Resilience Target RTUA integrity to the Resilience Authority RA.
   - In further embodiments, the concept explained for hardware TEEs can be extended by combining this architecture with that using Privilege Levels and Memory Protection MP as described above for the previous embodiments. As a result of such a combination, the architecture will consist of four regions, namely the Secure World SW in a privileged level, the Secure World SW in an unprivileged level, the Insecure World IW in a privileged level, and the Insecure World IW in an unprivileged level. This provides a possibility of four regions that are isolated by each other using TrustZone and privilege levels Memory Protection MP, where the Resilience Engine RE is in the most secure region, The secure privileged region. Other regions can be used for other purposes, such as a Resilience Authority RA entry point, a network stack or the Resilience Target RTUA based on the system details.

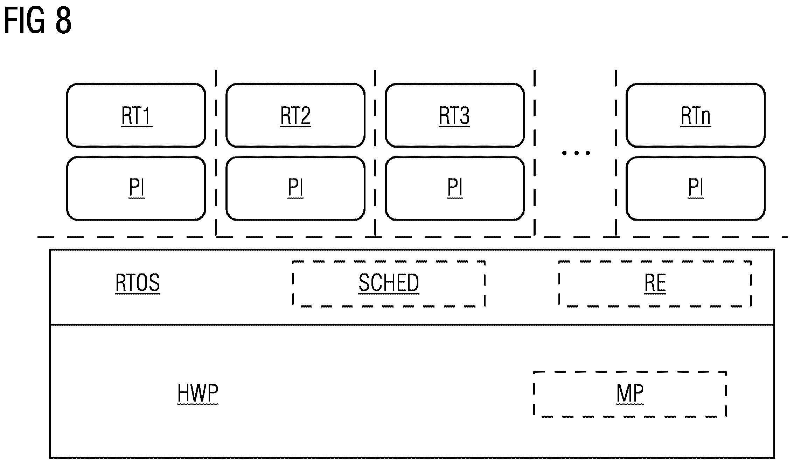

An abstract design using software TEEs, is depicted in Figure 8. The software TEEs leverage on Memory Protection MP technologies, such as MPU in ARM and PMP in RISC-V RISC to create trusted execution environments (TEE). Therefore, our design bases on same technologies but proposes an architecture, which makes an Resilience Engine RE integration more secure and efficient. In this architecture, the bottom layer is hardware, namely the processor HWP, which offers a Memory Protection MP technology. Then, on top of the processor HWP, a Real-time Operating System RTOS is executed. Some examples can be FreeRTOS, Zephyr RTOS, or others. The Real-time Operating System RTOS layer is executed in privileged level and has three main tasks, such as isolation of the Resilience Target RTUA using Memory Protection MP technology, scheduling of the Resilience Target RTUA, and executing the Resilience Engine RE features, such as an integrity and authenticity check. Then on top of the Real-Time Operating System RTOS layer, there are multiple Resilience Targets RTUA, here denoted as RT1, RT2, RT3, RTn, which are executed in unprivileged level.

The working process of this architecture consists of following steps:
1. System boots up and starts executing the Real-Time Operating System RTOS layer. This layer is executed in privileged mode and responsible for configuring the Memory Protection MP technology registers to isolate the Resilience Targets RT1, RT2, RT3, RTn from each other. This layer must also ensure that the Resilience Targets RT1, RT2, RT3, RTn do not have any access of the Real-time Operating System RTOS layer, which consists of the scheduler SCHED and the Resilience Engine RE.
2. Since the Real-time Operating System RTOS layer implements a scheduler SCHED, it will be triggered periodically to securely switch executing next Resilience Targets RT1, RT2, RT3, RTn layer in round-robin fashion. Once this trigger happens, the Real-time Operating System RTOS layer component in form of the Resilience Engine RE checks the integrity and authenticity of the Resilience Targets RT1, RT2, RT3, RTn. This can be done, e.g., either by computing an HMAC value or signature and comparing it with a previously stored value. It is important that this pre-calculated value is stored in the Resilience Engine's RE own region, which is then isolated from other Resilience Targets RT1, RT2, RT3, RTn so that it can only be read and written by the Resilience Engine RE as well as the Secret Keys SK needed for the secret computations.
3. If in the Real-time Operating System RTOS layer, the Resilience Engine RE detects no mismatch it moves on with other regions in round-robin fashion and moves on checking the integrity and authenticity of the Resilience Targets RT1, RT2, RT3, RTn. Once mismatch is detected, the Resilience Engine RE disables all interfaces of the Resilience Targets RT1, RT2, RT3, RTn to isolate it from the rest of the system and starts a recovery process. This recovery process can be onboard, remote or in a more efficient way, which is described later in a further embodiment.
4. Once the recovery is successful, the Resilience Engine RE moves on checking the integrity and authenticity of the Resilience Targets RT1, RT2, RT3, RTn.

The embodiment is now explained more concretely, taking MultiZone TEE as an example for software TEEs. The architecture of MultiZone security is depicted in Figure 8, which consists of three main layers. The bottom layer, the hardware layer RISC, of MultiZone architecture is the RISC-V processor HWP core with" U" extension in which the processor HWP core can execute in two different operation modes, namely an User Mode U and a Machine Mode M. Machine mode M has full access to all system resources, including the PMP configuration registers, whereas user mode has restricted access to system resources.

The next layer is called a "MultiZone Runtime" MZR, which serves as an isolation layer between the between upcoming Zones Z1, Z2, Z3, Z4 and their corresponding Peripherals P and interrupts and runs in the machine mode M. It consists of two subcomponents, namely "MultiZone nanoKernel (Separation Kernel)" and "MultiZone Secure Communications (Messenger)". The separation kernel is responsible for configuring the PMP PMP, thus defining read, write and execute permissions of each region, to isolate resources of each zone Z1, Z2, Z3, Z4 from the others Z1, Z2, Z3, Z4 at run-time. These resources can be RAM or ROM memory, I/Os and interrupts. It also implements a real-time scheduler SCHED, which can be configured in round-robin or co-operative style so that each zone Z1, Z2, Z3, Z4 is executed periodically even if one of the other zones Z1, Z2, Z3, Z4 are attacked or not halted. This feature provides us the activeness that we need for a Resilience Engine RE. On the other hand, the messenger is responsible for the secure communication between the zones Z1, Z2, Z3, Z4 on a non-shared memory basis. Then, on the top of "MultiZone Runtime" MZR layer, isolated runtime environments, zones Z1, Z2, Z3, Z4, are executed in user mode U with their corresponding peripherals P and interrupts .

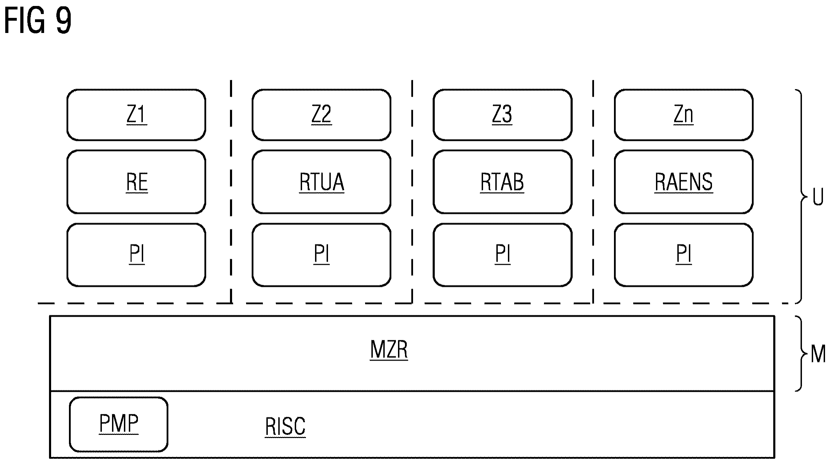

In the depicted MultiZone embodiment, we have four zones, namely the Resilience Engine RE, the Resilience Target RTUA, the Resilience Target Application Backup RTAB and an Resilience Authority RA entry point. Embodiment is depicted in Figure 9.

The Resilience Engine RE is responsible for checking the integrity and authenticity of other zones Z1, Z2, Z3, Z4 and ensuring that the system is executing correctly. The Resilience Target RTUA can be any type of user application, which should be protected. The Resilience Target Application Backup RTAB is simply the backup of the Resilience Target RTUA, which remains normally inactive. Lastly, a Network Stack RAENS, is the RA entry point, which is connected through the network to the Resilience Authority RA and which is responsible for the remote recovery process.

The working process of this system consists of following steps:
1. System boots up and starts executing the zones in round-robin fashion based on the "Tick" rate specified in MultiZone policy file. It is important to note that the Resilience Target Application Backup RTAB stays inactive.
2. In time slices the Resilience Engine RE checks continuously the integrity and authenticity of the Resilience Target RTUA and the Resilience Target Application Backup RTAB. This can be done, e.g., either by computing an HMAC value or signature and comparing it with a previously stored value. It is important that this pre-calculated value is stored in own regions of the Resilience Engine RE, which is then isolated by other regions so that it can only be read and written by the Resilience Engine RE as well as the Secret Keys SK needed for the secret computations.
3. If the Resilience Engine detects no mismatch, it moves on with other regions in round-robin fashion and moves on checking the integrity and authenticity of the Resilience Target RTUA and the Resilience Target Application Backup RTAB. Once a mismatch is detected, the Resilience Engine disables all interfaces of the Resilience Target RTUA to isolate it from the rest of the system and makes the Resilience Target Application Backup RTABS active so that the system can move on with its functionality.
4. Once the recovery is successful, The Resilience Engine RE moves on checking the integrity and authenticity of the Resilience Target RTUA.
5. If fRE detects a mismatch of the integrity/authenticity of both the Resilience Target RTUA and the Resilience Target Application Backup RTAB, it sends an alert to the Resilience Authority RA entry zone to start a remote recovery process.

Technical notes:
- The access policy of the zones Z1, Z2, Z3, Z4 needs to be specified based on the system requirements. For instance, the Resilience Engine needs to have read and execution rights on its own code region, read and write rights on the code regions of the Resilience Target RTUA and the Resilience Target Application Backup RTAB. The Resilience Target RTUA and the Resilience Target Application Backup RTAB need only read access on their own code regions. The Resilience Authority entry Network Stack RAENS needs write access rights on the code region of the Resilience Target RTUA and the Resilience Target Application Backup RTAB, so that it can update them, and needs read and execute access on its own code region. It is important to note that, this is just an example configuration. The configuration of the other resources of the zones, such as data region like RAM, peripherals, interrupts, and others need to be carried out based on the system requirements.

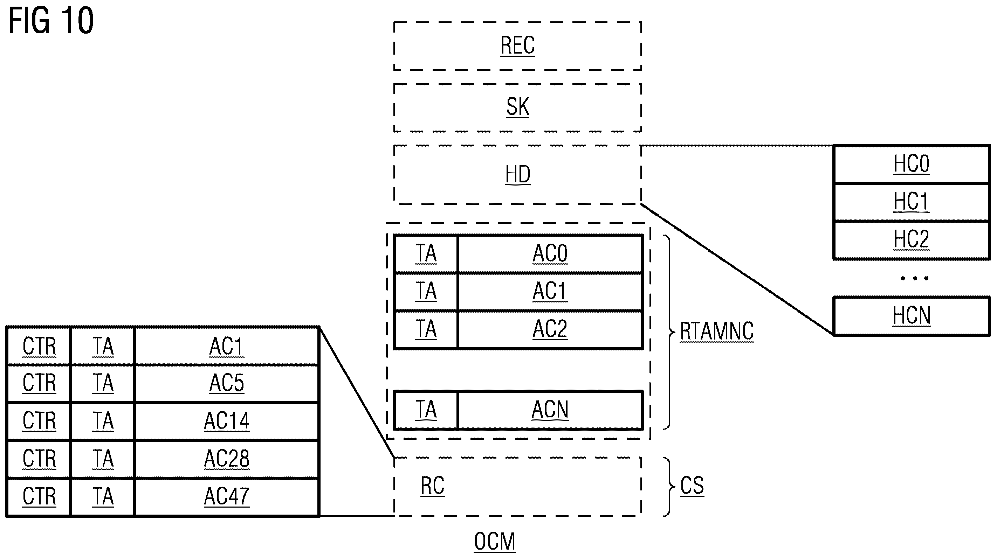

In the following, a particular use case of the depicted embodiment is described with the help of the architectural design shown in Fig. 10. Here, a recovery mechanism is used with the previously described Resilience Engine RE. This recovery mechanism can be utilized during the recovery step of the Resilience Engine RE to make the recovery process more efficient realizing a sort of cache.

In this architecture we have five main memory regions of the On-Chip Memory OCM. These contain a Resilience Engine Code REC, consisting of both the Resilience Engine Startup Code RESC and the Resilience Engine Main Code REMC, the Secret Key, e.g. to be used in a MAC, Hash Digests HD, e.g., MAC digests, the Resilience Target Application RTAMNC consisting of N chunks, and a Recovery Cache RC region. It is important to note that Recovery Cache RC region is not a cache memory but is also part of the non-volatile memory as other four regions. It is called as Recovery Cache RC since it works in similar way. In this architecture, the four memory regions which do not include the Resilience Target Application RTAMNC consisting of N chunks, are part of the Secure World SW and the memory region hosting the Resilience Target Application RTAMNC consisting of N chunks is part of the Insecure World IW in TrustZone. In this way, it can be ensured that the Resilience Target Application RTAMNC consisting of N chunks cannot access the other four regions, which is crucial for this architecture.

The working process of this architecture consists of following steps:
1) The Resilience Engine RE goes to the Resilience Target Application RTAMNC memory, reads one of its chunks AC0, AC1, AC2, ACN with its tag TA, and calculates MAC over it using secret key.
2) Then, the Resilience Engine RE compares a calculated MAC with its corresponding pre-calculated MAC value HC0, HC1, HC2, HCN from the Hash Digest HD region and finds the corresponding MAC value based on the chunk number.
3) If there is a match, the Resilience Engine RE goes to next chunk AC0, AC1, AC2, ACN.
4) If there is a mismatch, the Resilience Engine RE goes to the Recovery Cache RC and checks the Tag TA of each chunk AC1, AC5, AC14, AC 28, AC47 in the Recovery Cache RC.
5) If it finds that a Tag TA matches, it recovers the respective chunk AC1, AC5, AC14, AC 28, AC47 from the Recovery Cache RC and increments the counter value by one.
6) If the counter value exceeds a predetermined threshold value, the Resilience Engine RE reports to the Resilience Authority RA so that the Resilience Authority RA is informed for a potential vulnerability that is often used to fixe with a remote firmware update.
7) If no Tag TA matches, the Resilience Engine RE opens a secure remote channel to the Resilience Authority RA to get corresponding chunk with valid tag.
8) Then, the Resilience Engine RE overwrites the chunk AC1, AC5, AC14, AC 28, AC47 with less counter value with new chunk AC1, AC5, AC14, AC 28, AC47 with valid tag.

Anytime, the Resilience Authority RA may also want a report of the Recovery Cache RC counters to assess the system.

## Claims

1. Semiconductor chip comprising at least a processor (MCUO, RISC) and a trusted execution environment (SW; SHP, IHP, STP, ITP) and a firmware configured to run on the semiconductor chip, wherein the firmware is configured to run a resilience engine (RE) that is realized within the trusted execution environment (SW; SHP, IHP, STP, ITP).

2. Semiconductor chip according to the previous claim, wherein the processor (MCUO, RISC) comprises the trusted execution environment (SW; SHP, IHP, STP, ITP).

3. Semiconductor chip according to one of the previous claims, wherein the processor (MCUO, RISC) is configured to operate with privileged processes (SHP, IHP, STP, ITP) and unprivileged processes (STU, ITU) and in which the trusted execution environment (SW; SHP, IHP, STP, ITP) is realized with privileged processes (SHP, IHP, STP, ITP) of the processor.

4. Semiconductor chip according to one of the previous claims, wherein the processor is configured with memory protection (MP) technology resulting in at least one secure environment (SW) of the processor and at least one insecure environment (IW) of the processor (MCUO, RISC) and wherein the trusted execution environment (SW; SHP, IHP, STP, ITP) is realized with the secure environment (SW).

5. Semiconductor chip according to one of the previous claims, wherein the resilience engine (RE) comprises integrity and/or authenticity information of a resilience target (RTUA).

6. Semiconductor chip according to the previous claim, wherein the resilience target (RTUA) is an application software.

7. Semiconductor chip according to one of the previous claims, wherein the resilience engine (RE) comprises a timer (T) functionality, that is configured to trigger an integrity check (IAC) and/or authenticity check (IAC) of the resilience target (RTUA) by the resilience engine (RE).

8. Semiconductor chip according to one of the previous claims, wherein the resilience engine (RE) comprises an attestation (A) functionality configured to perform a remote attestation (A) of a resilience target (RTUA).

9. Semiconductor chip according to one of the previous claims, wherein the resilience engine (RE) is configured for the recovery of at least one app (RTAMNC) and wherein the resilience engine (RE) comprises at least one hash (HC0, HC1, HC2, NCH) for the app (RTAMNC) and cryptographic means (SK) for cryptographically verifying the app (RTAMNC), wherein the recovery of the app (RTAMNC) preferably involves chunks (AC0, AC1, AC2, ACN), and wherein the resilience engine (RE) preferably comprises hashes (HC0, HC1, HC2, NCH) for the chunks (AC0, AC1, AC2, ACN).

10. Semiconductor chip according to the previous claim, wherein the resilience engine (RE) is configured to recover an application from an app (RTUA) backup and wherein the resilience engine (RE) is configured to trigger an integrity check (IAC) and/or authenticity check (IAC) of the app backup.

11. Semiconductor chip according to the previous claim, wherein the resilience engine (RE) is configured to initiate a remote app backup (RSU) in case the integrity check (IAC) and/or authenticity check (IAC) of the app backup (RSU) fails.

12. Semiconductor chip according to one of the previous claims, wherein the processor (MCUO, RISC) is an ARM processor, in particular an ARMv7-M processor or an ARMv7-M compatible processor (MCUO, RISC), or a RISC-V-processor.

13. Firmware for a semiconductor chip that comprises at least a processor (MCUO, RISC) and a trusted execution environment (SW; SHP, IHP, STP, ITP), that is configured to run on the semiconductor chip and that is configured to run a resilience engine (RE) in the trusted execution environment (SW; SHP, IHP, STP, ITP).

14. Firmware according to the previous claim, wherein the Firmware is configured to run on a semiconductor chip with a processor (MCUO, RISC) that comprises the trusted execution environment (SW; SHP, IHP, STP, ITP).

15. Industrial device with a semiconductor chip according to one of the claims claim 1 to 12 and/or running a firmware according to claim 13 or 14.
